# DEMANDE DE BREVET EUROPEEN

(11) **EP 3 062 097 A1**
(43) Date de publication de la demande: **31.08.2016**
(21) Numéro de dépôt: 15156949.8
(22) Date de dépôt: 27.02.2015
(51) Int. Cl.: G01N 27/22

(54) **Capteur d'humidité avec module thermique**

(71) Demandeur: EM Microelectronic-Marin SA, 2074 Marin (CH)
(72) Inventeur: Novac, Pinchas, 2000 Neuchâtel (CH)
(74) Mandataire: Tournel, Maxime Jean-Joseph

(57) **Abrégé**

La présente invention concerne un capteur d'humidité (1) comprenant une plaque de base (10) en silicium sur laquelle plusieurs couches diélectriques intermétalliques (16), chacune munie d'une zone métallique (18), et une couche métallique sont agencées, ladite couche métallique (20) étant gravée pour former deux électrodes (22) comprenant chacune une armature munie d'une multitude de bras, ces armatures étant montées de sorte que les bras de chaque armature soient entrelacés pour avoir des bras placés en regard les uns des autres. Le capteur peut comprendre un module de température ou de chauffage.

## Description

La présente invention concerne un capteur d'humidité comprenant une plaque de base en silicium sur laquelle au moins une pluralité de couches diélectriques intermétalliques, chacune munie d'une zone métallique, et une couche métallique sont agencées, ladite couche métallique étant gravée pour former deux électrodes comprenant chacune une armature munie d'une multitude de bras, ces armatures étant montées de sorte que les bras de chaque armature soient entrelacés pour avoir des bras placés en regard les uns des autres.

### Art antérieur

Il est connu des capteurs d'humidité pour circuit électronique. Un tel capteur d'humidité est un capteur d'humidité à peignes interdigités.

Un tel capteur se compose d'une base de wafer silicium sur lequel au moins une couche de diélectrique inter-niveau (ILD) est placée. Sur cette couche inter-niveau, une pluralité de couches diélectriques intermétalliques (IMD). Ces couches, préférentiellement au nombre de trois, sont superposées et comprennent chacune des zones métalliques pour de la conduction électrique.

Au-dessus de ces couches diélectriques intermétalliques, une couche conductrice servant pour le peigne interdigité est réalisée, cette couche pouvant être en aluminium. Cette couche d'aluminium est ensuite gravée pour former ledit peigne. Une fois le peigne formé, le tout est recouvert d'une couche de passivation.

Cette plaque gravée est ensuite stockée puis utilisée lors d'une seconde phase de fabrication lors de laquelle elle est préparée pour utilisation. Cette seconde phase de fabrication consiste en une étape d'ouverture durant laquelle la couche de passivation est gravée au niveau du peigne et au niveau des plages de contact. Cette étape de gravure de la passivation permet de graver la couche de passivation située entre les différentes branches du peigne.

Une fois cette étape terminée, une couche de protection de l'aluminium contre la corrosion est déposée, cette couche pouvant être une couche d'oxyde de nitrure.

La dernière étape consiste à déposer une couche de polyimide pour protéger le tout.

Toutefois, cette construction présente des inconvénients. Un premier inconvénient vient de la fabrication en deux phases dudit capteur. En effet, le fait d'avoir deux phases distinctes pour la fabrication du capteur impose la présence de cycles thermiques supplémentaires. Ces cycles thermiques supplémentaires entrainent l'apparition de contraintes thermiques supplémentaires sur la plaque et le peigne interdigité pouvant détériorer ledit capteur d'humidité et/ou toute autre circuiterie implémentée sur le même substrat.

Un second inconvénient vient de la gravure lors de la seconde phase. En effet, durant la seconde phase durant laquelle la couche de passivation est gravée, il y a apparition de capacités parasites. Ces capacités parasites proviennent de la gravure qui n'est pas parfaite c'est-à-dire dont les flancs ne sont pas parfaitement droits. Par conséquent, des résidus de la couche de passivation sont présents entrainant l'apparition de ces capacités parasites.

Par ailleurs, il est à constater que les capteurs d'humidité sont sensibles à la température. Cette sensibilité à la température provoque une dérive des mesures en fonction de la température de sorte qu'à taux d'humidité constant, une variation de température influera sur le signal de sortie fournit par le capteur.

### Résumé de l'invention

Un des buts de la présente invention est de fournir un capteur d'humidité plus fiable.

A cet effet, la présente invention consiste en un capteur d'humidité comprenant une plaque de base en silicium sur laquelle plusieurs couches diélectriques intermétalliques, chacune munie d'une zone métallique, et une couche métallique sont agencées, ladite couche métallique étant gravée pour former deux électrodes comprenant chacune une armature munie d'une multitude de bras, ces armatures étant montées de sorte que les bras de chaque armature soient entrelacés pour avoir des bras placées en regard les uns des autres, caractérisé en ce que ledit capteur comprend en outre une couche active intercalée entre la plaque de base et la première couche diélectrique intermétallique dans laquelle un détecteur de température est agencé, ce détecteur de température fournissant un signal représentatif de la température.

Dans un premier mode de réalisation avantageux, le module de température comprend un détecteur de température comportant deux transistors bipolaires en parallèle, chaque transistor est connecté par sa base et son collecteur à la masse et par son émetteur à une source de courant connectée à une alimentation.

Dans un second mode de réalisation avantageux, le module de température comprend un détecteur de température comportant un transistor bipolaire en parallèle connecté par sa base et son collecteur à la masse et par son émetteur à une source de courant connectée à une alimentation et une source de tension fournissant une tension de référence.

Dans un troisième mode de réalisation avantageux, chaque transistor comprend un substrat silicium de type P-, un caisson de type N- étant réalisé sur le substrat de type P-, une couche de dioxyde de silicium étant déposée sur ce substrat silicium de type P- et gravée localement de sorte à pouvoir y déposer du métal formant des plots de connexion pour la base, l'émetteur et le collecteur dudit transistor, des caissons de type P+ étant agencés sous chaque plot de métal formant le collecteur et l'émetteur alors que sous le plot de la base, un caisson de N+ est agencé.

Dans un quatrième mode de réalisation avantageux, pour chaque transistor bipolaire, la tension base-émetteur au point de connexion entre ledit transistor et la source de courant est extraite pour être envoyée vers un amplificateur différentiateur, ledit amplificateur différentiateur réalisant la différence des tensions base-émetteur des deux transistors pour fournir une tension représentative de la température.

Dans un autre mode de réalisation avantageux, la tension base-émetteur au point de connexion entre ledit transistor et la source de courant est extraite pour être envoyée vers un amplificateur différentiateur, ledit amplificateur différentiateur réalisant la différence entre la tension base-émetteur et la tension de référence pour fournir une tension représentative de la température.

Dans un autre mode de réalisation avantageux, l'amplificateur différentiateur est agencé pour être connecté à un convertisseur analogique numérique fournissant un signal à un microcontrôleur via une interface numérique.

Dans un autre mode de réalisation avantageux, le capteur comporte en outre un élément de chauffage.

Dans un autre mode de réalisation avantageux, l'élément de chauffage est agencé au niveau d'une couche intercalée entre la couche active et la première couche diélectrique intermétallique.

L'invention concerne aussi un capteur d'humidité comprenant une plaque de base en silicium sur laquelle au moins une pluralité de couches diélectriques intermétalliques, chacune munie d'une zone métallique et une couche métallique sont agencées, ladite couche métallique étant gravée pour former deux électrodes comprenant chacune une armature munie d'une multitude de bras, ces armatures étant montées de sorte que les bras de chaque armature soient entrelacés pour avoir des bras placés en regard les uns des autres, caractérisé en ce que ledit capteur comprend en outre une couche active intercalée entre la plaque de base et la première couche diélectrique intermétallique et une couche intercalée entre la couche active et la première couche diélectrique intermétallique dans laquelle un élément de chauffage est agencé.

Dans un autre mode de réalisation avantageux, ledit élément de chauffage comprend une couche de silicium polycristallin formant une résistance connectée à une zone métallique d'au moins une couche diélectrique intermétallique via des plots de connexions.

Dans un autre mode de réalisation avantageux, ledit élément de chauffage comprend une pluralité de résistances disposées en parallèle, chaque résistance étant connectée par une de ses bornes à la masse et par une autre de ses bornes à un transistor de commande lui-même connecté à une tension d'alimentation, ledit transistor de commande recevant un signal pour permettre ou non le passage du courant dans la résistance.

Dans un autre mode de réalisation avantageux, tous les transistors sont commandés par le même signal de commande.

Dans un autre mode de réalisation avantageux, tous les transistors sont commandés de façon distincte les uns des autres.

### Brève description des figures

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- Les figures 1 à 2 représentent schématiquement un mode de réalisation du capteur d'humidité selon l'invention;
- Les figures 3a, 4a représentent des modes de réalisation du détecteur de température du capteur d'humidité selon l'invention.
- Les figures 3b, 4b représentent des diagrammes de tensions liés aux modes de réalisation du détecteur de température du capteur d'humidité selon l'invention.
- La figure 5 représente un module de température du capteur d'humidité selon l'invention.
- Les figures 6 et 7 représentent un élément de chauffage du capteur d'humidité selon l'invention.

### Description détaillée

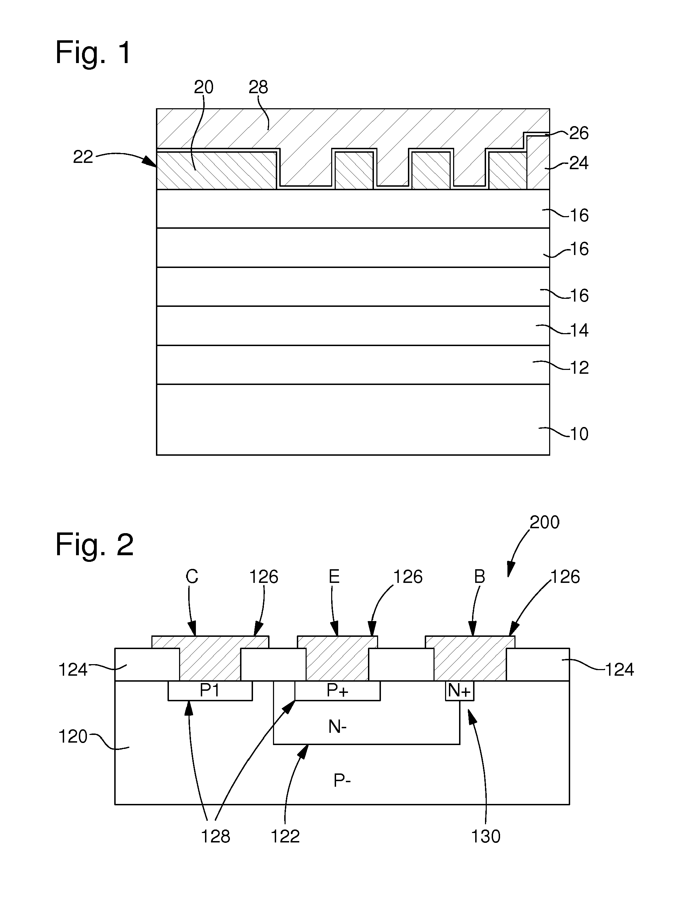

Sur la figure 1 est représenté un capteur d'humidité 1 selon un mode de réalisation de l'invention. Un tel capteur comprend une plaque de base 10 en silicium appelée wafer. Cette plaque de base 10 sert de substrat pour ledit capteur et une première étape consiste à se munir de cette plaque de base 10.

Sur ce substrat, différentes couches sont successivement déposées lors d'une seconde étape. Une première couche 12 est déposée. Cette couche comprend une zone dite active et une zone de dioxyde de silicium.

Par-dessus cette première couche, une couche de diélectrique inter niveau (ILD) 14 est déposée.

Par la suite, une pluralité de couches diélectriques intermétalliques 16 (IMD) sont déposées. Ces couches 16, préférentiellement au nombre de trois (IMD1, IMD2 et IMD3), sont superposées et comprennent chacune des zones métalliques 18 pour de la conduction électrique. Ces zones métalliques 18 pouvant être reliées ensembles par des connecteurs de type VIA 18a.

Au-dessus de ces couches diélectriques intermétalliques, une couche conductrice 20 servant pour le peigne interdigité est réalisée, cette couche étant déposée lors de la seconde étape et peut être en aluminium comme visible à la figure 1. Cette seconde étape est une étape connue de l'homme du métier.

Cette couche d'aluminium est gravée lors d'une troisième étape pour former ledit peigne. Un peigne interdigital est généralement formé par deux électrodes 22 comprenant chacune une armature munie d'une multitude de bras. Ces armatures sont montées de sorte que les bras de chaque armature soient entrelacés.

Une fois le peigne formé, une quatrième étape consiste à recouvrir le tout d'une couche de passivation 24.

Une fois cette couche de passivation gravée, une étape d'ouverture ou cinquième étape est réalisée. L'étape d'ouverture se fait lors de la même phase c'est-à-dire dans la continuité des étapes précédentes.

Cette étape d'ouverture consiste premièrement à enlever la couche de passivation au niveau du peigne interdigité formant le capteur par gravure.

Une fois cette cinquième étape réalisée, une sixième étape consistant à déposer une couche de protection 26 (capping layer or couche de recouvrement, barrière d'humidité, etc.) est opérée. En effet, il existe un risque de corrosion de l'aluminium des électrodes en contact avec le polyimide qui est une couche de protection déposée ultérieurement, et la diffusion de l'aluminium dans le polyimide. Dans le cas de notre solution, cette couche de protection est réalisée en oxyde de nitrure (SiONx) avec une épaisseur de 20nm ±2nm.

Dans une septième étape, la couche de passivation au niveau des plages de contact est ouverte, ces plages de contact étant réalisées sur la couche de métal 20 déposée sur la dernière couche diélectrique intermétallique 16. Les plages de contact ainsi dégagées permettent d'y placer les moyens de contacts.

Dans les étapes suivantes, une couche de polyimide 28 est déposée et des moyens de contact sont agencés.

Avantageusement selon l'invention, le capteur d'humidité comprend en outre un module température 200. Un tel module température 200 comprend en premier lieu un détecteur de température 210. En effet, un capteur d'humidité est sensible à la température de sorte que les informations fournies par ledit capteur varient suivant la température. Le détecteur de température 210 utilisé permet de mesurer la température et de fournir une information de température. Cette information peut être envoyée à un microcontrôleur agencé sur la même plaque de base ou sur une autre plaque de base. Cette information est utilisée par le microcontrôleur 300.

Effectivement, le microcontrôleur 300 pourrait comprendre une zone mémoire dans laquelle une table de correspondance est stockée ou gérer une fonction de transfert prédéfinie. La table de correspondance permet, pour une température donnée, de connaitre la dérive du capteur d'humidité et ainsi de corriger l'information d'humidité fournie.

Astucieusement, le détecteur de température 210 est agencé sur la même plaque de base du capteur d'humidité 1. Plus particulièrement, ce détecteur de température 210 est composé d'une pluralité de transistors bipolaires. Un transistor bipolaire consiste en deux jonctions PN pour former une structure NPN ou PNP. Dans un transistor bipolaire PNP, dont la base est connectée à la zone N alors que l'émetteur et le collecteur sont connectés à une zone P.

Au niveau du capteur d'humidité tel que décrit précédemment, les transistors bipolaires sont agencés au niveau de la première couche 12 comprenant une zone dite active et une zone de dioxyde de silicium.

La zone active est réalisée de sorte à se présenter sous la forme substrat silicium de type P- 120 dans lequel des transistors bipolaires sont agencés comme visible à la figure 2. Ces transistors comportent un caisson de type N- 122 réalisé sur le substrat de type P-. Sur ce substrat silicium de type P-, une couche de dioxyde de silicium 124 est déposée, cette couche étant gravée localement de sorte à pouvoir y déposer du métal pour former des parties métalliques 126 pour la base, l'émetteur et le collecteur. Pour le collecteur et l'émetteur, des diffusions de type P+ 128 sont agencées sous chaque plot de métal alors que sous le plot de la base, un ancrage de N+ 130 est agencé.

Un tel détecteur de température 210 peut se présenter sous plusieurs façons différentes.

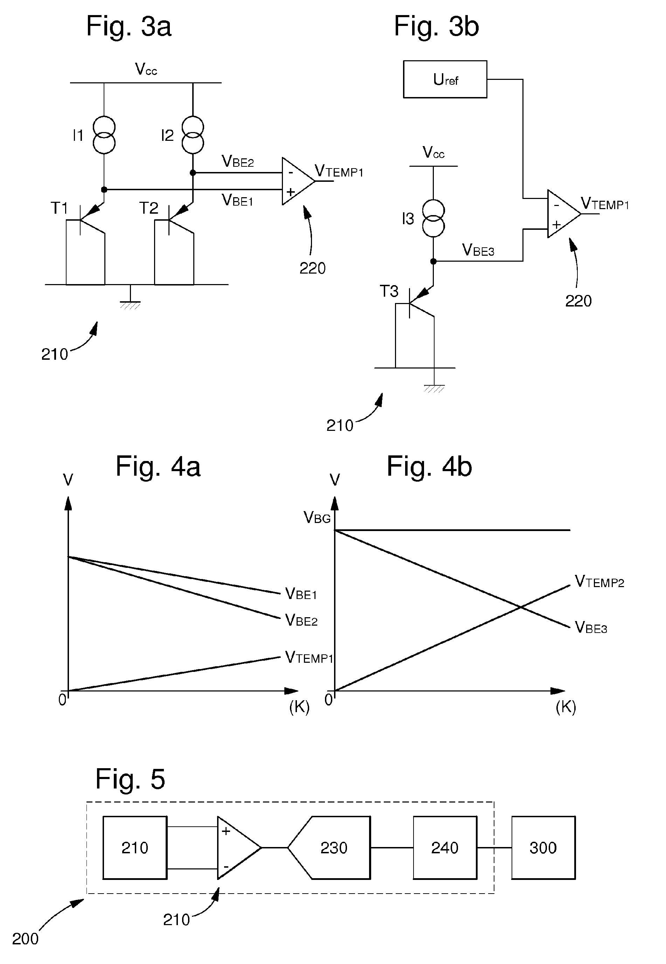

Dans un premier mode de réalisation visible aux figures 3a et 4a, consiste à avoir deux transistors bipolaire du type PNP appelé T1 et T2 mis en parallèle, chaque transistor T1 et T2 voyant sa base et son collecteur connectés à la masse alors que l'émetteur est connecté à une source de courant 11, 12. Pour chaque branche, la tension au point de connexion de la source de courant et de l'émetteur, appelé Vbe, est extraite pour être envoyée vers un amplificateur différentiateur 220. Le transistor T1 a une tension base-émetteur appelée V_{BE1} alors que le transistor T2 a une tension base-émetteur appelée V_{BE2}.

En effet, un tel transistor PNP voit sa tension base-émetteur V_{BE} présenter une caractéristique de tension en fonction de la température en degré Kelvin, cette tension V_{BE} valant une tension de bande interdite V_{BG} à la température T= 0°K et cette tension V_{BE} voit sa valeur diminuer avec la température.

Dans le cas présent, les deux tensions V_{BE1} et V_{BE2} sont agencées pour être différentes : si les courants sont identiques alors les transistors ont des dimensions (surface d'émetteur) différentes mais si les dimensions (surface d'émetteur) sont égales, les courants sont différents. En pratique, pour réaliser des surfaces différentes avec des rapports bien définis, on utilise des transistors identiques en parallèle. Les deux tensions V_{BE1} et V_{BE2} sont passés dans un circuit faisant la différence de ces tensions tel qu'un amplificateur différentiateur 220 pour obtenir une tension résultante V_{TEMP1} = V_{BE1} - V_{BE2}. Cette tension V_{TEMP1} a la particularité d'augmenter linéairement avec la température sur un diagramme tension-température.

Lorsqu'on convertit ce diagramme en degré Celsius on constate un offset a T=0°C et il est donc possible d'avoir une tension résultante V_{TEMP1} en fonction de la température.

Dans un second mode de réalisation visible aux figures 3b et 4b, le détecteur de température 210 comprend un transistor bipolaire du type PNP appelé T3 voyant sa base et son collecteur connectés à la masse alors que l'émetteur est connecté à une source de courant I3. La tension au point de connexion de la source de courant I3 et de l'émetteur, appelé V_{BE3}, est extraite pour être envoyée vers un amplificateur différentiateur 220. L'autre borne de l'amplificateur différentiateur 220 est connectée à une source de tension de référence Uref dont la valeur est une valeur de tension de bande interdite V_{BG} valant environ 1.285V. La tension V_{BG} et la tension V_{BE3} sont ainsi envoyées vers un amplificateur différentiateur 220 qui va fournir une tension résultant V_{TEMP2}= V_{BG} - V_{BE3}.

Cette tension V_{TEMP2} a la particularité d'augmenter linéairement avec la température sur un diagramme tension-température. Lorsqu'on convertit ce diagramme en degré Celsius on constate un offset a T=0°C et il est donc possible d'avoir une tension résultante V_{TEMP2} en fonction de la température.

On constate que cette seconde façon de faire présente un avantage en termes de précision. En effet, la comparaison entre la tension V_{BE3} et une tension de référence V_{BG} entraîne une tension résultante V_{TEMP2} ayant une pente supérieure à la tension résultante V_{TEMP1}. Cette différence de pente implique une différence d'offset a T=0°C entre V_{TEMP2} et V_{TEMP1}, l'offset de V_{TEMP2} étant largement plus important que l'offset de V_{TEMP1}. Dans un exemple,

Cette différence d'offset et de pente entraine que le montage selon la seconde façon est plus précise car, étant donné que la pente (en mV/°C) est plus importante, chaque hausse de température correspond à une plus forte hausse de tension qui en devient plus facilement détectable. Avec le montage selon la première façon, une plus faible pente implique qu'à chaque hausse de température correspond à une plus faible hausse de tension. Cette faible hausse est donc plus difficilement détectable et implique l'utilisation d'un étage de gain pour la détection de la variation de tension et donc de température. Or, un étage de gain peut entrainer un niveau de bruit supérieur ou l'apparition de saturations dégradant le signal.

La tension résultante V_{TEMP1} ou V_{TEMP2} est envoyée dans un circuit de traitement visible à la figure 5 comprenant un convertisseur analogique/numérique 230, une interface numérique 240 de type SPI ou I₂C afin d'avoir un signal électrique représentatif de la température qui est ensuite fourni à un microprocesseur 300 qui va l'utiliser pour opérer une compensation thermique sur ledit capteur d'humidité afin que la dérive due à la température soit compensée. Cette compensation se fait en utilisant une fonction de transfert.

Bien entendu, l'amplificateur différentiateur 220 peut être directement intégré dans le convertisseur analogique/numérique 230.

Dans une variante avantageuse, le capteur d'humidité selon la présente invention est muni d'un élément de chauffage 30. Un tel chauffage est utilisé pour assurer le reconditionnement c'est-à-dire enlever l'humidité présente lors du processus de fabrication, enlever la condensation ou améliorer l'hystérèse et le temps de récupération du capteur d'humidité.

Une seconde façon d'utiliser cet élément de chauffage 30 est de s'en servir suite à une exposition à une humidité excessive. Effectivement, l'exposition à une humidité extrême de la couche de polyimide peut perturber le bon fonctionnement du capteur d'humidité 1, la couche de polyimide recouvrant la structure métallique formant ledit capteur. L'élément de chauffage 30 est alors utilisé pour accélérer l'évacuation de cet excès d'humidité de la couche de polyimide. Pour cela, l'élément de chauffage 30 est activée afin d'augmenter la température du capteur et de faire sécher la couche de polyimide.

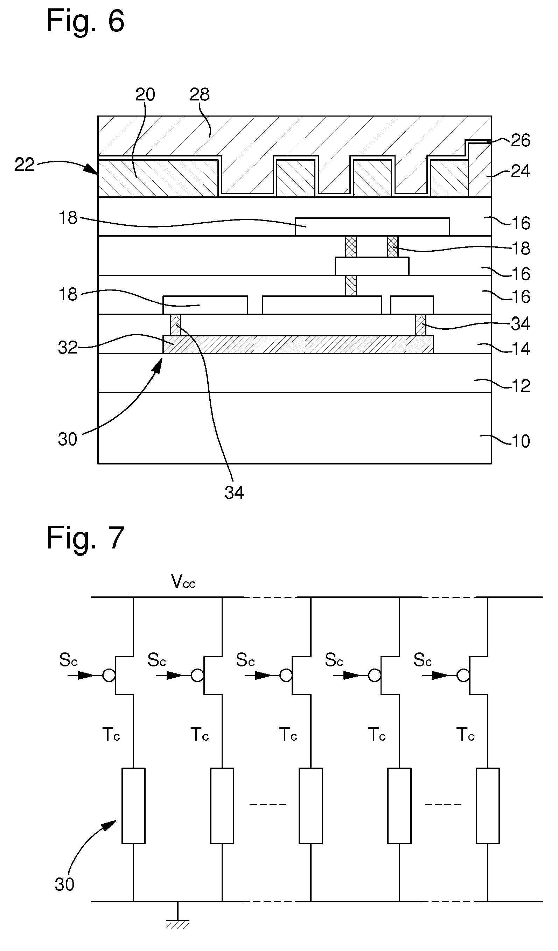

Un élément de chauffage 30, visible à la figure 6, utilisé est une résistance et plus particulièrement une résistance polycristalline 32. Une telle résistance polycristalline 32 consiste en une couche de silicium polycristallin. Cette couche de silicium polycristallin est agencée au niveau de la couche de diélectrique inter niveau (ILD) 14 déposée sur la première couche 12 dite active. Pour que la chaleur produite par la résistance polycristalline se diffuse, la couche de diélectrique inter niveau (ILD) 14 est munie de connexions métalliques 34. Ces connexions métalliques s'étendent dans au moins une des couches diélectriques intermétalliques 16 (IMD) pour être reliées à la zone métallique de cette couche diélectrique intermétallique 16 (IMD). Un courant, de l'ordre de 40mA, est envoyé dans la couche de silicium polycristallin pour activer la fonction chauffage.

Cet élément de chauffage 30, visible à la figure 7, peut se présenter sous la forme d'une pluralité de module comprenant chacun une résistance connectée chacune avec un transistor de commande TC recevant un signal de commande Sc, les modules étant connectés en parallèle. Cette configuration permet d'avoir une bonne répartition de la chaleur sur tout le capteur.

Il est d'ailleurs envisageable que le capteur d'humidité 1 puisse avoir l'élément de chauffage 30 sans le module de température 200 ou inversement.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

## Revendications

1. Capteur d'humidité (1) comprenant une plaque de base (10) en silicium sur laquelle plusieurs couches diélectriques intermétalliques (16), chacune munie d'une zone métallique (18), et une couche métallique sont agencées, ladite couche métallique (20) étant gravée pour former deux électrodes (22) comprenant chacune une armature munie d'une multitude de bras, ces armatures étant montées de sorte que les bras de chaque armature soient entrelacés pour avoir des bras placés en regard les uns des autres, **caractérisé en ce que** ledit capteur comprend en outre une couche active (12) intercalée entre la plaque de base et la première couche diélectrique (16) intermétallique dans laquelle un module de température (200) est agencée, ce module de température (200) fournissant un signal représentatif de la température.

2. Capteur d'humidité selon la revendication 1, **caractérisé en ce que** le module de température (200) comprend un détecteur de température (210) comportant deux transistors bipolaires (T1, T2) en parallèle, chaque transistor est connecté par sa base et son collecteur à la masse et par son émetteur à une source de courant (I1, I2) connectée à une alimentation.

3. Capteur d'humidité selon la revendication 1, **caractérisé en ce que** le module de température (200) comprend un détecteur de température (210) comportant un transistor bipolaire (T3) connecté par sa base et son collecteur à la masse et par son émetteur à une source de courant (13) connectée à une alimentation et une source de tension (Uref) fournissant une tension de référence (V_{BG}).

4. Capteur d'humidité selon la revendication 2, **caractérisé en ce que**, pour chaque transistor bipolaire (T1, T2), la tension base-émetteur (V_{BE1}, V_{BE2}) au point de connexion entre ledit transistor et la source de courant (I1, I2) est extraite pour être envoyée vers un amplificateur différentiateur (220), ledit amplificateur différentiateur réalisant la différence des tensions base-émetteur des deux transistors pour fournir une tension représentative de la température (V_{TEMP1}).

5. Capteur d'humidité selon la revendication 3, **caractérisé en ce que** la tension base-émetteur (V_{BE3}) au point de connexion entre ledit transistor (T3) et la source de courant (I3) est extraite pour être envoyée vers un amplificateur différentiateur (220), ledit amplificateur différentiateur réalisant la différence entre la tension base-émetteur et la tension de référence (V_{BG}) pour fournir une tension représentative de la température (V_{TEMP2}).

6. Capteur d'humidité selon l'une des revendications 2 à 5, **caractérisé en ce que** chaque transistor (T1, T2, T3) comprend un substrat silicium de type P- (120), un caisson de type N- (122) étant réalisé sur le substrat de type P-, une couche de dioxyde de silicium (124) étant déposée sur ce substrat silicium de type P- et gravée localement de sorte à pouvoir y déposer du métal formant des plots de connexion (126) pour la base, l'émetteur et le collecteur dudit transistor, des caissons de type P+ (128) étant agencés sous chaque plot de métal formant le collecteur et l'émetteur alors que sous le plot de la base, un ancrage de N+ (130) est agencé.

7. Capteur d'humidité selon l'une des revendications 4 ou 5, **caractérisé en ce que** l'amplificateur différentiateur (220) est agencé pour être connecté à un convertisseur analogique-numérique (230) fournissant un signal à un microcontrôleur (300) via une interface numérique (240).

8. Capteur d'humidité selon l'une des revendications précédentes, **caractérisé en ce qu'**il comporte en outre un élément de chauffage (30).

9. Capteur d'humidité selon la revendication 8, **caractérisé en ce que** l'élément de chauffage (30) est agencé au niveau d'une couche intercalée (14) entre la couche active (12) et la première couche diélectrique intermétallique (16).

10. Capteur d'humidité (1) comprenant une plaque de base (10) en silicium sur laquelle au moins une pluralité de couches diélectriques intermétallique (16), chacune munie d'une zone métallique (18), et une couche métallique sont agencées, ladite couche métallique (20) étant gravée pour former deux électrodes (22) comprenant chacune une armature munie d'une multitude de bras, ces armatures étant montées de sorte que les bras de chaque armature soient entrelacés pour avoir des bras placés en regard les uns des autres, **caractérisé en ce que** ledit capteur comprend en outre une couche active (12) intercalée entre la plaque de base (10) et la première couche diélectrique intermétallique (16) et une couche (14) intercalée entre la couche active et la première couche diélectrique intermétallique dans laquelle un élément de chauffage (30) est agencé.

11. Capteur d'humidité selon l'une des revendications 8 à 10, **caractérisé en ce que** ledit élément de chauffage (30) comprend une couche de silicium polycristallin (32) formant une résistance connectée à une zone métallique d'au moins une couche diélectrique intermétallique via des plots de connexions (34).

12. Capteur d'humidité selon la revendication 11, **caractérisé en ce que** ledit élément de chauffage (30) comprend une pluralité de résistances (32) disposées en parallèle, chaque résistance étant connectée par une de ses bornes à la masse et par une autre de ses bornes à un transistor de commande (TC) lui-même connecté à une tension d'alimentation, ledit transistor de commande recevant un signal (Sc) pour permettre ou non le passage du courant dans la résistance.

13. Capteur d'humidité selon la revendication 12, **caractérisé en ce que** tous les transistors (TC) sont commandés par le même signal de commande.

14. Capteur d'humidité selon la revendication 12, **caractérisé en ce que** tous les transistors (TC) sont commandés de façon distincte les uns des autres.
